# EUROPÄISCHE PATENTANMELDUNG

(11) **EP 4 293 512 A1**
(43) Veröffentlichungstag der Anmeldung: **20.12.2023**
(21) Anmeldenummer: 22178790.6
(22) Anmeldetag: 14.06.2022
(51) Int. Cl.: G06F 9/50, H04L 67/10

(54) **VERFAHREN ZUM BEREITSTELLEN EINER MEHRZAHL VON ANWENDUNGEN UND KOMMUNIKATIONSSYSTEM**

(71) Anmelder: Siemens Aktiengesellschaft, 80333 München (DE)
(72) Erfinder: Bode, Sebastian, 59229 Ahlen (DE); Niedermeier, Christoph, 80999 München (DE)
(74) Vertreter: Siemens Patent Attorneys

(57) **Zusammenfassung**

Es wird ein Verfahren zum Bereitstellen einer Mehrzahl von Anwendungen in einem Kommunikationssystem mit mehreren Kommunikationseinrichtungen vorgeschlagen. Das Verfahren umfasst die Schritte:
a) Identifizieren einer Anzahl N1 von potenziellen Kommunikationsbeziehungen zwischen zwei der Anwendungen, mit N1 ≥ 1,
b) Klassifizieren der jeweiligen identifizierten Kommunikationsbeziehung hinsichtlich ihrer Kommunikationshäufigkeit zum Erhalten eines jeweiligen ersten Klassifikationsergebnisses,
c) Klassifizieren der jeweiligen identifizierten Kommunikationsbeziehung hinsichtlich eines bestimmten Sicherheitsparameters zum Erhalten eines jeweiligen zweiten Klassifikationsergebnisses,
d) Ermitteln eines Stärkewertes einer der jeweiligen identifizierten Kommunikationsbeziehung zugeordneten Sicherheit in Abhängigkeit des jeweiligen erhaltenen ersten und zweiten Klassifikationsergebnisses, und
e) Bereitstellen der zwei Anwendungen auf einer selben Kommunikationseinrichtung, wenn der ermittelte Stärkewert einen vorgegebenen Schwellwert überschreitet.

Dieses Verfahren ermöglicht es in vorteilhafter Weise, dass zwei Anwendungen, zwischen welchen zumindest eine sicherheitskritische Kommunikationsbeziehung vorliegt, auf derselben Kommunikationseinrichtung ausgerollt werden, wodurch die Datensicherheit erhöht wird.

## Beschreibung

Die vorliegende Erfindung betrifft ein Verfahren und ein Computerprogrammprodukt zum Bereitstellen einer Mehrzahl von Anwendungen sowie ein Kommunikationssystem.

Mit der zunehmenden Virtualisierung, beispielsweise in Form der Nutzung von Containertechnologien und Microservice-Architekturen, ändern sich Netzwerktopologien sehr dynamisch und sind für eine einzelne Anwendung, beispielsweise einen einzelnen Microservice oder Container nicht einsehbar. Der Grund liegt in der dynamischen Zuordnung von Anwendungen zu Recheneinheiten, welche durch eine Containerplattform vorgenommen wird. Damit trotz dieser Zuordnung eine stabile Erreichbarkeit der einzelnen Anwendungen gewährleistet werden kann, stellen Containerplattformen virtuelle Netzwerkschnittstellen bereit, welche die tatsächlich vorhandene Netzwerktopologie verbergen.

Dies führt zu der Herausforderung, dass Teilnehmer an einer Kommunikation in der Regel keinerlei Kenntnisse über die tatsächlich genutzte Netzwerkinfrastruktur haben, obwohl die verwendete Netzwerkinfrastruktur insbesondere in heterogenen Umgebungen erhebliche Bedeutung für die Sicherheit der zu übertragenden Daten hat. Aufgrund dieser fehlenden Kenntnisse ist es schwer, adäquate Sicherheitsmaßnahmen zu ergreifen, also solche Maßnahmen, die so wenig Ressourcen wie möglich nutzen, dabei aber das notwendige Sicherheitsniveau einhalten. Daher kann sich die Situation ergeben, dass besonders sicherheitskritische Datenübertragungen sogar zwischen verschiedenen Kommunikationseinrichtungen stattfinden können und wegen der damit verbundenen größeren Bedrohung durch aufwendige Verschlüsselungsmaßnahmen gesichert werden müssen.

Vor diesem Hintergrund besteht eine Aufgabe der vorliegenden Erfindung darin, die Bereitstellung einer Mehrzahl von Anwendungen zu verbessern.

Gemäß einem ersten Aspekt wird ein Verfahren zum Bereitstellen einer Mehrzahl von Anwendungen in einem Kommunikationssystem, insbesondere innerhalb eines Automatisierungssystems, mit einer Mehrzahl von Kommunikationseinrichtungen vorgeschlagen. Das Verfahren umfasst die Schritte:
a) Identifizieren einer Anzahl N1 von potenziellen Kommunikationsbeziehungen zwischen zumindest zwei der Anwendungen aus der Mehrzahl von Anwendungen, wobei eine jeweilige potenzielle Kommunikationsbeziehung ein Übertragen von Daten zwischen den zwei Anwendungen während eines Betriebs der zwei Anwendungen ermöglicht, mit N1 ≥ 1,
b) Klassifizieren der jeweiligen identifizierten Kommunikationsbeziehung hinsichtlich ihrer Kommunikationshäufigkeit zum Erhalten eines jeweiligen ersten Klassifikationsergebnisses,
c) Klassifizieren der jeweiligen identifizierten Kommunikationsbeziehung hinsichtlich zumindest eines bestimmten Sicherheitsparameters zum Erhalten eines jeweiligen zweiten Klassifikationsergebnisses,
d) Ermitteln eines Stärkewertes einer der jeweiligen identifizierten Kommunikationsbeziehung zugeordneten Sicherheit in Abhängigkeit des jeweiligen erhaltenen ersten und zweiten Klassifikationsergebnisses, und
e) Bereitstellen der zwei Anwendungen auf einer selben Kommunikationseinrichtung der Mehrzahl, wenn der ermittelte Stärkewert zumindest einen vorgegebenen Schwellwert überschreitet.

Dieses Verfahren hat den technischen Effekt, dass die jeweiligen zwischen zwei Anwendungen identifizierten Kommunikationsbeziehungen hinsichtlich ihrer Kommunikationshäufigkeit und eines bestimmten Sicherheitsparameters klassifiziert werden. Als Ergebnis dieser Klassifikation wird dann entschieden (Schritt e)), welche Anwendungen auf welchen Kommunikationseinrichtungen bereitgestellt werden sollen.

Dies führt dazu, dass zwei Anwendungen, zwischen welchen eine Kommunikationsbeziehung identifiziert wird, bei welcher der ermittelte Stärkewert den vorgegebenen Schwellwert überschreitet, als sicherheitskritische Kommunikationsbeziehung eingestuft wird. Zwei Anwendungen, zwischen welchen solch eine sicherheitskritische Kommunikationsbeziehung vorliegt, werden mittels des Verfahrens in vorteilhafter Weise "lokalisiert", was bedeutet, dass diese zwei Anwendungen lokal auf derselben Kommunikationseinrichtung bereitgestellt bzw. ausgerollt werden, wodurch die Datensicherheit erhöht wird.

Da mittels des Verfahrens sicherheitskritische Kommunikationsbeziehungen zwischen zwei Anwendungen lokalisiert werden, entfällt eine aufwendige Verschlüsselung der Datenübertragung der jeweiligen sicherheitskritischen Kommunikationsbeziehung, wodurch die verfügbaren Rechen- und Netzwerkressourcen erhöht werden.

Zusätzlich wird durch das Verfahren in vorteilhafter Weise das Erreichen des Schutzziels der informationstechnischen Verfügbarkeit verbessert, da durch die Lokalisierung der Anwendungen mit sicherheitskritischen Kommunikationsbeziehungen die Wahrscheinlichkeit eines erfolgreichen Angriffs, beispielsweise eines Man-in-the-Middle-Angriffs, verringert wird, wodurch die Zuverlässigkeit während des Betriebs der zwei Anwendungen erhöht wird.

Ein Kommunikationssystem umfasst beispielsweise mehrere Systeme, welche standortabhängig und/oder standortunabhängig miteinander Daten austauschen können. Eine Teilmenge der Mehrzahl der Anwendungen als auch der Mehrzahl von Kommunikationseinrichtungen kann sich auf mehrere Systeme an unterschiedlichen Standorten unterteilen. Insbesondere können die mehreren Systeme innerhalb eines Weitverkehrsnetzes (WAN) zur Kommunikation verbunden sein.

Das Automatisierungssystem ist beispielsweise als eine Produktionsanlage, eine Fabrik, ein Rechenzentrum, eine Forschungsanlage, ein Gebäudesystem und/oder ein Verkehrsleit- und Kontrollsystem ausgebildet.

Eine Kommunikationsbeziehung umfasst vorzugsweise eine Kommunikation zwischen zwei Anwendungen, also ein Übertragen von Daten zwischen zwei Anwendungen. Das Übertragen von Daten kann bidirektional oder unidirektional zwischen den zwei Anwendungen erfolgen.

Eine potenzielle Kommunikationsbeziehung ist insbesondere eine Kommunikationsbeziehung, welche zumindest in der Vergangenheit bereits zwischen den zwei Anwendungen stattgefunden hat oder in der Zukunft möglich ist. Die potenzielle Kommunikationsbeziehung ist insbesondere in gespeicherter Form, vorzugsweise als Softwaredatei, in einem internen Speicher des Kommunikationssystems, in einem externen Speicher eines mit dem Kommunikationssystem verbundenen weiteren Kommunikationssystems und/oder in einer Cloud, auf welche das Kommunikationssystem Zugriff hat und Daten abrufen kann, vorhanden. Beispielsweise wird in dem Schritt a) auf den internen Speicher, den externen Speicher und/oder die Cloud zugegriffen, um zumindest eine potenzielle Kommunikationsbeziehung zwischen zwei Anwendungen zu identifizieren oder festzustellen. Die Cloud umfasst insbesondere eine Public Cloud, eine Private Cloud und/oder eine Hybride Cloud.

Unter dem Begriff "während eines Betriebs" wird insbesondere ein Zeitpunkt und/oder eine Zeitspanne verstanden, in welcher zumindest eine Anwendung initialisiert wurde, noch ausgeführt wird und/oder noch nicht beendet ist. Unter diesem Begriff kann beispielsweise auch verstanden werden, dass zumindest eine der zwei Anwendungen während ihrer Laufzeit mit der anderen Anwendung kommuniziert und im Zuge dessen Daten zu der anderen Anwendung überträgt. Ein Betrieb umfasst insbesondere auch Zeitpunkte oder Zeitspannen, an denen das Übertragen zwischen den zwei Anwendungen selten oder zu bestimmten Umständen, wie beispielsweise im Fehlerfall, stattfindet.

Die Schritte a) bis e) können insbesondere zumindest einmalig vor dem Start des Betriebs zumindest einer der Anwendungen der Mehrzahl von Anwendungen ausgeführt werden.

Ein Sicherheitsparameter umfasst insbesondere vorbestimmte Klassen, wie beispielsweise sehr kritisch, kritisch, mäßig kritisch und unkritisch. Jeder identifizierten Kommunikationsbeziehung wird ein bestimmter Sicherheitsparameter, also eine vorbestimmte Klasse im Zuge der Klassifizierung gemäß Schritt c) zugewiesen. Das jeweilige erhaltene zweite Klassifikationsergebnis spiegelt dann insbesondere die Zuweisung oder die Klassifikation der jeweiligen identifizierten Kommunikationsbeziehung zu einer der vorbestimmten Klassen wider. Eine als sehr kritisch klassifizierte Kommunikationsbeziehung erfordert beispielsweise erhöhte Sicherheitsmaßnahmen bei der Datenübertragung, wohingegen eine jeweilige identifizierte Kommunikationsbeziehung, welche als unkritisch klassifiziert wird, geringe oder keine Sicherheitsmaßnahmen bei der Datenübertragung erfordert.

Ein ermittelter Stärkewert spiegelt eine der jeweiligen identifizierten Kommunikationsbeziehung zugeordnete Sicherheit wider. Die Sicherheit ist insbesondere eine Gesamtsicherheitsanforderung der jeweiligen identifizierten Kommunikationsbeziehung in Abhängigkeit des ersten und zweiten Klassifikationsergebnisses. Die Gesamtsicherheitsanforderung einer identifizierten Kommunikationsbeziehung ist insbesondere umso höher, je sicherheitskritischer die Kommunikationsbeziehung ist und je häufiger die Kommunikationsbeziehung übertragen wird, wobei hierbei insbesondere als ein weiterer Parameter die innerhalb einer Zeitspanne ausgetauschte Datenmenge dieser Kommunikationsbeziehung mit in die Gesamtsicherheitsanforderung eingehen kann. Dabei ist die Gesamtsicherheitsanforderung vorzugsweise umso höher, je größer die innerhalb einer Zeitspanne ausgetauschte Datenmenge dieser Kommunikationsbeziehung ist. Die Gesamtsicherheitsanforderung ist beispielweise umso niedriger, je sicherheitsunkritischer die Kommunikationsbeziehung ist und je weniger häufig die Kommunikationsbeziehung übertragen wird.

Ferner ist die Gesamtsicherheitsanforderung vorzugsweise umso niedriger, je kleiner die innerhalb einer Zeitspanne ausgetauschte Datenmenge dieser Kommunikationsbeziehung ist. Mit anderen Worten ist der ermittelte Stärkewert oder die Gesamtsicherheitsanforderung zumindest insbesondere abhängig von dem für die identifizierte Kommunikationsbeziehung jeweiligen bestimmten Sicherheitsparameter sowie der Kommunikationshäufigkeit dieser jeweiligen identifizierten Kommunikationsbeziehung.

Gemäß einer Ausführungsform umfasst der Schritt d):
Ermitteln des Stärkewertes anhand einer bestimmten Kostenfunktion, welche das jeweilige erhaltene erste und zweite Klassifikationsergebnis als Eingaben aufweist.

Die bestimmte Kostenfunktion wird insbesondere als mathematisches Optimierungsproblem beschrieben. Hierbei wird vorzugsweise das Minimum der bestimmten Kostenfunktion ermittelt, welches dann insbesondere dem ermittelten Stärkewert entspricht. Die bestimmte Kostenfunktion ist beispielsweise als eine zweidimensionale mathematische Funktion ausgebildet, von welcher das Minimum gefunden werden soll, und welche als Eingaben das erste und zweite Klassifikationsergebnis aufweist.

In einer Ausführungsform ist es auch möglich, dass zumindest eine Anzahl von potenziellen Kommunikationsbeziehungen zwischen einem jeweiligen Paar oder zwischen jeweiligen mehreren Paaren von Anwendungen der Mehrzahl von Anwendungen des Kommunikationssystems identifiziert werden. In diesem Fall können bei den Verfahrensschritten a) - e) alle identifizierten Kommunikationsbeziehungen zwischen allen jeweiligen Paaren von Anwendungen des Kommunikationssystems zur Beurteilung, welche Anwendung mit welcher weiteren Anwendung auf welcher Kommunikationseinrichtung ausgerollt werden soll, miteinfließen. In diesem Fall wird insbesondere eine globale Kostenfunktion gebildet, welche minimiert wird und in welche als Eingaben insbesondere alle jeweiligen erhaltenen ersten und zweiten Klassifikationsergebnisse aller in dem Kommunikationssystem zwischen allen Anwendungen identifizierten Kommunikationsbeziehungen miteinfließen. Das Ergebnis dieser Minimierung der globalen Kostenfunktion entspricht dann dem optimalen Bereitstellen (Deployment) aller Anwendungen des Kommunikationssystems. Dieses Ergebnis ist vorzugsweise der anhand der Minimierung der globalen Kostenfunktion ermittelte Stärkewert.

Insbesondere werden bei der Bildung der globalen Kostenfunktion die jeweiligen erhaltenen ersten und zweiten Klassifikationsergebnisse jeweils als Terme zusammengefasst und in eine vorbestimmte mathematische Funktion, welche minimiert wird, eingegeben.

Gemäß einer weiteren Ausführungsform werden die Schritte a) bis d) zeitlich vor dem Schritt e) durchgeführt, wobei das Bereitstellen im Schritt e) ein Ausrollen der zwei Anwendungen auf derselben Kommunikationseinrichtung umfasst.

Unter dem Ausrollen wird insbesondere ein Verteilen oder auch ein Deployment der zwei Anwendungen verstanden. Das Deployment umfasst insbesondere die Entscheidung, welche Anwendungen der Mehrzahl von Anwendungen auf welchen Kommunikationseinrichtungen der Mehrzahl von Kommunikationseinrichtungen ausgerollt werden sollen.

Die Schritte a) bis e) können insbesondere als Software-Orchestrierung bezeichnet werden, wobei die Schritte a) - d) zeitlich vor dem Beginn oder Durchführen des Deployments der Anwendungen in Schritt e) ausgeführt werden.

Gemäß einer weiteren Ausführungsform umfasst das Verfahren ferner:
f) Wiederholen der Schritte a) bis e), wenn während des Betriebs der zwei Anwendungen eine vorbestimmte Änderung betreffend zumindest eine der jeweiligen Kommunikationsbeziehungen zwischen den zwei Anwendungen und/oder eine vorbestimmte Änderung betreffend eine der zwei Anwendungen erkannt wird.

Diese Ausführungsform kann als dynamisches Deployment bezeichnet werden. Das dynamische Deployment hat den technischen Effekt, dass zumindest die Kommunikationshäufigkeit und die bestimmten Sicherheitsparameter der jeweiligen identifizierten Kommunikationsbeziehung bei allen Änderungen in der Umgebung einer betroffenen Anwendung neu bewertet bzw. klassifiziert werden. Dabei werden die betroffene Anwendung sowie ihre Anwendung, mit welcher zumindest eine Kommunikationsbeziehung besteht, gemeinsam auf einer anderen Kommunikationseinrichtung oder getrennt voneinander auf verschiedenen Kommunikationseinrichtungen neu bereitgestellt bzw. ausgerollt. Dies stellt in vorteilhafter Weise sicher, dass die Datensicherheit einer Datenübertragung oder einer Kommunikationsbeziehung zwischen zwei Anwendungen fortlaufend überwacht und angepasst wird, was wiederum die Datensicherheit erhöht.

Der Schritt f) kann auch mehrfach während des Betriebs zumindest einer der (betroffenen) Anwendungen, beispielsweise zu zufälligen Zeitpunkten oder periodisch zu fest definierten Zeitpunkten, wiederholt werden.

Gemäß einer weiteren Ausführungsform umfasst die vorbestimmte Änderung eine Änderung des bestimmten Sicherheitsparameters zumindest einer der jeweiligen Kommunikationsbeziehungen zwischen den zwei Anwendungen und/oder eine Änderung einer Ressourcenkapazität einer weiteren in dem Kommunikationssystem vorhandenen Kommunikationseinrichtung, wobei die Änderung der Ressourcenkapazität ein Vorhandensein von Ressourcenkapazitäten für zumindest eine der jeweiligen Kommunikationsbeziehungen auf der weiteren Kommunikationseinrichtung umfasst.

Eine Änderung des bestimmten Sicherheitsparameters umfasst beispielsweise einen Fall, wenn sich der bestimmte Sicherheitsparameter einer jeweiligen identifizierten Kommunikationsbeziehung zwischen den zwei Anwendungen von unkritisch auf kritisch ändert. Auch kann die vorbestimmte Änderung eine Änderung der Kommunikationshäufigkeit einer jeweiligen identifizierten Kommunikationsbeziehung umfassen.

Unter einem Vorhandensein von Ressourcenkapazitäten wird insbesondere verstanden, dass zusätzliche bestimmte Ressourcen für das Bereitstellen der zwei Anwendungen auf zumindest der weiteren Kommunikationseinrichtung und/oder mehreren weiteren Kommunikationseinrichtungen vorliegen oder frei zur Verfügung stehen.

Bestimmte Ressourcen umfassen beispielsweise Speicherplatz, Rechenzeit und/oder an die jeweilige Kommunikationseinrichtung und/oder an die jeweilige Anwendung anzubindende lokale Feldgeräte.

Gemäß einer weiteren Ausführungsform umfasst der Schritt e) ferner:
Bereitstellen der zwei Anwendungen auf derselben Kommunikationseinrichtung, wenn der ermittelte Stärkewert den vorgegebenen Schwellwert überschreitet und wenn auf derselben Kommunikationseinrichtung bestimmte Ressourcen verfügbar sind.

Hierdurch wird vorteilhafterweise sichergestellt, dass zwei Anwendungen nur auf derselben Kommunikationseinrichtung bereitgestellt oder ausgerollt werden, wenn auf dieser noch bestimmte Ressourcen frei oder verfügbar sind. Dies erhöht die Zuverlässigkeit während des Betriebs der zwei Anwendungen.

Gemäß einer weiteren Ausführungsform umfasst der Schritt c) ferner:
Klassifizieren der jeweiligen identifizierten Kommunikationsbeziehung hinsichtlich zumindest eines bestimmten Sicherheitsparameters und eines bestimmten Schutzziels zum Erhalten des jeweiligen zweiten Klassifikationsergebnisses.

Das bestimmte Schutzziel kann insbesondere eine oder mehrere der Schutzziele der Informationssicherheit, nämlich Vertraulichkeit, Authentizität, Integrität und Verfügbarkeit, umfassen. Diese Schutzziele geben vorzugsweise Aufschluss darüber, wie weit ein Datenübertragungssystem Informationssicherheit erreicht hat. Dies erhöht in vorteilhafter Weise die Sicherheit der Datenübertragung zwischen zumindest den zwei Anwendungen.

Gemäß einer weiteren Ausführungsform umfasst die Kommunikationshäufigkeit quantitative Parameter oder qualitative Parameter.

Quantitative Parameter umfassen beispielsweise eine Anzahl von potenziellen und/oder identifizierten Kommunikationsbeziehungen zwischen zwei Anwendungen innerhalb einer bestimmten Zeitspanne und/oder eine Höhe einer (potenziellen) ausgetauschten Datenmenge der potenziellen und/oder identifizierten Kommunikationsbeziehung zwischen zwei Anwendungen.

Qualitative Parameter umfassen beispielsweise eine Wahrscheinlichkeit wie häufig überhaupt eine identifizierte Kommunikationsbeziehung zwischen zwei Anwendungen vorhanden ist oder stattgefunden hat. Die Kategorien für die Wahrscheinlichkeit umfassen beispielsweise sehr häufig, häufig, gelegentlich, selten und sehr selten.

Gemäß einer weiteren Ausführungsform umfasst der Schritt e):
Bereitstellen der zwei Anwendungen jeweils auf unterschiedlichen Kommunikationseinrichtungen in dem Kommunikationssystem, wenn der ermittelte Stärkewert den vorgegebenen Schwellwert unterschreitet oder gleich dem vorgegebenen Schwellwert ist.

Sofern insbesondere zwischen zwei Anwendungen sicherheitsunkritische Kommunikationsbeziehungen ausgetauscht werden und/oder die quantitativen oder qualitativen Parameter der Kommunikationshäufigkeit mittelmäßig oder gering sind, werden die zwei Anwendungen auf unterschiedlichen Kommunikationseinrichtungen bereitgestellt.

Gemäß einer weiteren Ausführungsform ist eine Kommunikationseinrichtung des Kommunikationssystems zumindest als ein Hostrechner oder als ein Feldgerät ausgebildet, wobei das Kommunikationssystem ferner eine Anzahl N2 von Netzwerken umfasst, wobei ein jeweiliges Netzwerk jeweils zumindest eine Kommunikationseinrichtung umfasst, mit N2 ≥ 1.

Ein Netzwerk ist insbesondere ein lokales Netzwerk. In einem Netzwerk können auch eine Mehrzahl von Kommunikationseinrichtungen vorhanden sein.

Sowohl auf dem Hostrechner als auch auf dem Feldgerät können Anwendungen der Mehrzahl von Anwendungen ausgeführt werden. Ein Feldgerät kann auch einen Hostrechner umfassen. Insbesondere kann ein Hostrechner in dem Kommunikationssystem auch als ein Feldgerät ausgebildet sein.

Ein Hostrechner umfasst insbesondere zumindest einen oder mehrere Server. Ein Hostrechner stellt vorzugsweise zumindest eine Mehrzahl von Anwendungen bereit, welche er beispielsweise von einer Steuerungsvorrichtung des Kommunikationssystems, dem internen Speicher und/oder dem externen Speicher erhalten hat. Ein Hostrechner ist insbesondere physisch oder virtuell ausgebildet.

Unter einem Feldgerät wird vorliegend insbesondere eine hardwaremäßig ausgebildete Einheit verstanden, die eine bestimmte Funktionalität aufweist oder bereitstellt. Ein Feldgerät stellt vorzugsweise zumindest eine Mehrzahl von Anwendungen bereit, welche es von der Steuerungsvorrichtung, dem internen Speicher und/oder dem externen Speicher erhalten hat. Beispiele für Feldgeräte sind Sensoren, Roboter, Messgeräte, Computer und dergleichen. Derartige Feldgeräte umfassen insbesondere Steuerrechner oder Mikrocontroller, wie beispielsweise ein Field-programmable Gate Array (FPGA), die gewisse Ressourcen sowie Verknüpfungen oder Relationen zwischen Ressourcen aufweisen können. Ein Feldgerät kann dabei eine einzelne Steuerung oder ein einzelnes Gerät sein. Ein Feldgerät kann aber auch eine Vielzahl an Steuerungen oder funktionalen Einheiten aufweisen, wie beispielsweise ein Steuerschrank, die beispielsweise strukturell verbunden sind und/oder funktionell zusammenwirken. Dann kann eine jede Steuerung oder funktionale Einheit, die in dem Feldgerät zusammengefasst sind, als ein mit den weiteren Steuerungen oder funktionalen Einheiten verknüpftes und/oder abhängiges Feldgerät aufgefasst werden.

Insbesondere kann das Feldgerät und/oder der Hostrechner in einer Cloud-Computing-Umgebung eingebunden sein. Eine Cloud-Computing-Umgebung zeichnet sich beispielsweise durch eine Vernetzung der darin eingebundenen Elemente aus. Diese sind insbesondere zur Kommunikation untereinander eingerichtet, können also beispielsweise Daten, Meldungen und/oder Anfragen untereinander austauschen.

Gemäß einer weiteren Ausführungsform ist eine Anwendung zumindest als eine Applikation, als ein Dienst, als ein Microservice, als eine Gruppe von Microservices oder als eine in einem Container eingebettete Anwendung ausgebildet.

Eine Anwendung ist insbesondere als eine Software, als ein Programmcode oder als ein Softwaremodul ausgebildet. Eine Anwendung ist insbesondere ein Computerprogramm, welches genutzt wird, um eine nützliche oder gewünschte nicht systemtechnische Funktionalität zu bearbeiten oder zu unterstützen.

Der Begriff Dienst (engl. Service) beschreibt insbesondere eine technische, autarke Einheit, die zusammenhängende Funktionalitäten zu einem Themenkomplex bündelt und über eine klar definierte Schnittstelle zur Verfügung stellt. Beispiele sind hier Webservices, die Funktionalitäten für Dritte über das Inter- bzw. Intranet verfügbar machen, Netzwerkdienste, Systemdienste oder auch Telekommunikationsdienste.

Microservices sind Architekturmuster der Informationstechnik, bei denen komplexe Anwendungen aus unabhängigen Prozessen generiert werden, die untereinander mit sprachunabhängigen Programmierschnittstellen, wie beispielsweise APIs (engl. Application Programming Interface) kommunizieren können. Die Microservices sind weitgehend entkoppelt und erledigen beispielsweise eine Aufgabe. So ermöglichen sie einen modularen Aufbau von Anwendungen. Die Verwendung von Microservices hat den Vorteil, dass jeder Microservice unabhängig entwickelt und bereitgestellt werden kann, ohne dass dies Auswirkungen auf andere Microservices hat.

Der Container ist insbesondere ein Software-Container, in welchem eine jeweilige Anwendung ausführbar ist, und welcher von anderen Containern auf der jeweiligen Kommunikationseinrichtung getrennt ist.

In einem Container können auch als Microservices ausgebildete Anwendungen oder mehrere Teile einer Anwendung auf derselben Hardware unabhängig voneinander ausgeführt werden. Auch kann eine Gruppe von Anwendungen auf unterschiedlichen einzelnen Containern bzw. Kommunikationseinrichtungen ausgeführt werden.

Insbesondere umfasst eine Kommunikationseinrichtung, vorzugsweise ein Hostrechner oder ein Feldgerät, eine als Microservice ausgebildete Anwendung oder eine Gruppe von als Microservices ausgebildete Anwendung.

Eine oder mehrere Kommunikationseinrichtungen können jeweils zumindest eine Ausführungsumgebung, welche insbesondere als eine Virtualisierungsumgebung ausgebildet ist, aufweisen. Ein Beispiel für eine Virtualisierungsumgebung ist eine Containervirtualisierung, innerhalb welcher ein Container ausgeführt werden kann. Innerhalb des Containers kann dann eine Anwendung, vorzugsweise eine als Microservice ausgebildete Anwendung, ausgeführt werden.

Die Ausführungsumgebung kann auch eine Hypervisorvirtualisierungsumgebung sein. Zudem kann es sich bei der Anwendung um eine verteilte Anwendung handeln. Eine verteilte Anwendung ist insbesondere eine (Software)-Anwendung, die in einem Netzwerk auf mehreren Computern oder Kommunikationseinrichtungen ausgeführt werden und auf lokalen Servern oder in einer Cloud gespeichert werden kann.

Gemäß einem zweiten Aspekt wird ein Computerprogrammprodukt vorgeschlagen, welches Befehle umfasst, die bei der Ausführung des Programms durch einen Computer diesen veranlassen, das Verfahren gemäß dem ersten Aspekt auszuführen.

Ein Computerprogrammprodukt, wie z.B. ein Computerprogramm-Mittel, kann beispielsweise als Speichermedium, wie z.B. Speicherkarte, USB-Stick, CD-ROM, DVD, oder auch in Form einer herunterladbaren Datei von einem Server in einem Netzwerk bereitgestellt oder geliefert werden. Dies kann zum Beispiel in einem drahtlosen Kommunikationsnetzwerk durch die Übertragung einer entsprechenden Datei mit dem Computerprogrammprodukt oder dem Computerprogramm-Mittel erfolgen.

Gemäß einem dritten Aspekt wird ein Kommunikationssystem, insbesondere ein Automatisierungssystem, vorgeschlagen. Das Kommunikationssystem umfasst eine Mehrzahl von Anwendungen, eine Steuerungsvorrichtung und eine Mehrzahl von zumindest als Hostrechner oder Feldgerät ausgebildeter Kommunikationseinrichtungen, wobei zumindest eine Teilmenge der Mehrzahl von Anwendungen in einem Speicher der Steuerungsvorrichtung gespeichert ist, wobei die Steuerungsvorrichtung dazu eingerichtet ist, das Verfahren gemäß dem ersten Aspekt durchzuführen.

Gemäß einer Ausführungsform umfasst die Steuerungsvorrichtung eine Containerorchestrierungseinheit, welche dazu eingerichtet ist, sofern zumindest zwei der Anwendungen der Mehrzahl von Anwendungen jeweils als in einem Container eingebettete Anwendungen ausgebildet sind, das Verfahren gemäß dem ersten Aspekt durchzuführen.

Die Steuerungsvorrichtung umfasst zumindest einen Zentralrechner und die Containerorchestrierungssoftware, die insbesondere zum Einsatz kommt, wenn Anwendungen in Containern bereitgestellt werden. Ferner umfasst die Steuerungsvorrichtung Einheiten zur Verteilung und Steuerung von Anwendungen, welche nicht in einem Container bereitgestellt werden. Die Steuerungsvorrichtung ist insbesondere als ein Zentralrechner für alle oder für einen Teil der in dem Kommunikationssystem angeordneten Kommunikationseinrichtungen ausgebildet. Die Steuerungsvorrichtung als auch zumindest eine Kommunikationseinrichtung weisen Speicher zum Speichern der Anwendungen auf.

Der Speicher der Steuerungsvorrichtung kann insbesondere als ein interner Speicher der Steuerungsvorrichtung oder als ein externer Speicher ausgebildet sein, welcher extern zu der Steuerungsvorrichtung ist. Der externe Speicher ist beispielsweise in dem Kommunikationssystem angeordnet oder ist als eine mit dem Kommunikationssystem verbundene Cloud ausgebildet. Zumindest eine der Kommunikationseinrichtungen kann aber auch eine eigene Steuerungsvorrichtung aufweisen, die zur Durchführung des Verfahrens gemäß dem ersten Aspekt eingerichtet ist.

Die jeweilige Einheit, zum Beispiel die Containerorchestrierungseinheit, kann hardwaretechnisch und/oder auch softwaretechnisch implementiert sein. Bei einer hardwaretechnischen Implementierung kann die jeweilige Einheit als Vorrichtung oder als Teil einer Vorrichtung, zum Beispiel als Computer oder als Mikroprozessor oder als Steuerrechner eines Fahrzeuges ausgebildet sein. Bei einer softwaretechnischen Implementierung kann die jeweilige Einheit als Computerprogrammprodukt, als eine Funktion, als eine Routine, als Teil eines Programmcodes oder als ausführbares Objekt ausgebildet sein.

Die für das vorgeschlagene Verfahren beschriebenen Ausführungsformen und Merkmale gelten für die vorgeschlagene Vorrichtung entsprechend.

Weitere mögliche Implementierungen der Erfindung umfassen auch nicht explizit genannte Kombinationen von zuvor oder im Folgenden bezüglich der Ausführungsbeispiele beschriebenen Merkmale oder Ausführungsformen. Dabei wird der Fachmann auch Einzelaspekte als Verbesserungen oder Ergänzungen zu der jeweiligen Grundform der Erfindung hinzufügen.

Weitere vorteilhafte Ausgestaltungen und Aspekte der Erfindung sind Gegenstand der Unteransprüche sowie der im Folgenden beschriebenen Ausführungsbeispiele der Erfindung. Im Weiteren wird die Erfindung anhand von bevorzugten Ausführungsformen unter Bezugnahme auf die beigelegten Figuren näher erläutert.
- Fig. 1: zeigt ein schematisches Ablaufdiagramm eines Ausführungsbeispiels eines Verfahrens zum Bereitstellen einer Mehrzahl von Anwendungen;
- Fig. 2: zeigt ein schematisches Blockdiagramm eines Ausführungsbeispiels des Verfahrens gemäß Fig. 1; und
- Fig. 3: zeigt ein schematisches Blockdiagramm eines Ausführungsbeispiels eines Kommunikationssystems.

In den Figuren sind gleiche oder funktionsgleiche Elemente mit denselben Bezugszeichen versehen worden, sofern nichts anderes angegeben ist.

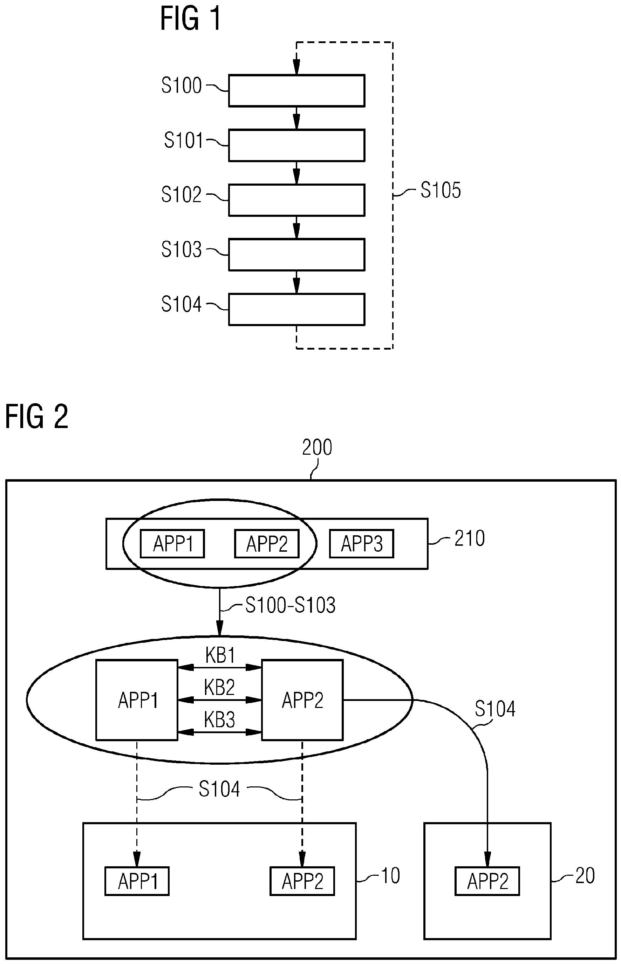

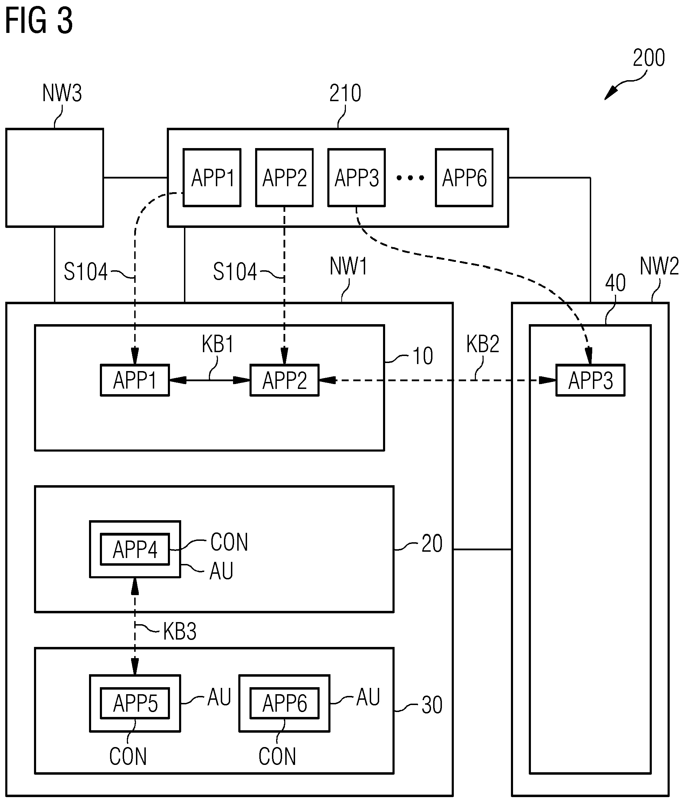

Fig. 1 zeigt ein schematisches Ablaufdiagramm eines Ausführungsbeispiels eines Verfahrens zum Bereitstellen einer Mehrzahl von Anwendungen APP1 - APP6 (siehe Fig. 2 und 3) in einem Kommunikationssystem 200 (siehe Fig. 2 oder 3) mit einer Mehrzahl von Kommunikationseinrichtungen 10 - 40 (siehe Fig. 2 und 3) .

Das Ausführungsbeispiel der Fig. 1 weist die folgenden Verfahrensschritte S100 - S105 auf:
In dem Schritt S100 werden eine Anzahl N1 von potenziellen Kommunikationsbeziehungen KB1 - KB3 (siehe Fig. 2 oder 3) zwischen zumindest zwei der Anwendungen APP1, APP2 aus der Mehrzahl von Anwendungen APP1 - APP6 identifiziert, mit N1 ≥ 1. Eine jeweilige potenzielle Kommunikationsbeziehung KB1 - KB3 ermöglicht ein Übertragen von Daten zwischen den zwei Anwendungen APP1, APP2 während eines Betriebs der zwei Anwendungen APP1, APP2.

Ferner wird in dem Schritt S101 die jeweilige identifizierte Kommunikationsbeziehung KB1 - KB3 hinsichtlich ihrer Kommunikationshäufigkeit, umfassend quantitative Parameter oder qualitative Parameter, zum Erhalten eines jeweiligen ersten Klassifikationsergebnisses klassifiziert.

Dann wird in dem Schritt S102 die jeweilige identifizierte Kommunikationsbeziehung KB1 - KB3 hinsichtlich eines bestimmten Sicherheitsparameters, und insbesondere eines bestimmten Schutzziels, zum Erhalten eines jeweiligen zweiten Klassifikationsergebnisses, klassifiziert.

Weiterhin wird in dem Schritt S103 ein Stärkewert einer der jeweiligen identifizierten Kommunikationsbeziehung KB1 - KB3 zugeordneten Sicherheit in Abhängigkeit des jeweiligen erhaltenen ersten und zweiten Klassifikationsergebnisses ermittelt. Der Stärkewert wird insbesondere anhand einer bestimmten Kostenfunktion, welche das jeweilige erhaltene erste und zweite Klassifikationsergebnis als Eingaben aufweist, ermittelt.

Zusätzlich werden in dem Schritt S104 die zwei Anwendungen APP1, APP2 auf einer selben Kommunikationseinrichtung 10 der Mehrzahl bereitgestellt oder ausgerollt, wenn der ermittelte Stärkewert einen vorgegebenen Schwellwert überschreitet, und insbesondere wenn auf derselben Kommunikationseinrichtung 10 bestimmte Ressourcen verfügbar sind.

Ferner sei angemerkt, dass die Schritte S100 - S103 zeitlich vor dem Schritt S104 durchgeführt werden.

Zusätzlich weist das Verfahren der Fig. 1 den weiteren Schritt S105 auf. In dem Schritt S105 werden die Schritte S100 - S104 wiederholt, wenn während des Betriebs der zwei Anwendungen APP1, APP2 eine vorbestimmte Änderung erkannt wird.

Die vorbestimmte Änderung kann eine Änderung des bestimmten Sicherheitsparameters zumindest einer der jeweiligen Kommunikationsbeziehungen KB1 - KB3 zwischen den zwei Anwendungen APP1, APP2 umfassen.

Alternativ umfasst die vorbestimmte Änderung eine Änderung einer Ressourcenkapazität einer weiteren in dem Kommunikationssystem 200 vorhandenen Kommunikationseinrichtung 20 - 40. Diese Änderung der Ressourcenkapazität umfasst insbesondere ein Vorhandensein von Ressourcenkapazitäten für zumindest eine der jeweiligen Kommunikationsbeziehungen KB1 - KB3 auf der weiteren Kommunikationseinrichtung 20 - 40.

Fig. 2 zeigt ein schematisches Blockdiagramm eines Ausführungsbeispiels des Verfahrens gemäß Fig. 1. Fig. 2 zeigt das Kommunikationssystem 200, welches in Fig. 2 als Automatisierungssystem ausgebildet ist. Ferner ist in Fig. 2 die Steuerungsvorrichtung 210 des Kommunikationssystems 200 dargestellt. In Fig. 2 sind die Anwendungen APP1 - APP6 (siehe Fig. 2 und 3) in einem internen Speicher der Steuerungsvorrichtung 210 abgelegt. Der Speicher kann alternativ extern zu der Steuerungsvorrichtung 210 ausgebildet sein oder in einer Cloud (nicht dargestellt), welche mit dem Kommunikationssystem 200 verbunden ist, bereitgestellt sein. Zumindest eine Kommunikationseinrichtung 10 - 40 (siehe Fig. 3) des Kommunikationssystems 200 ist als ein Hostrechner oder als ein Feldgerät ausgebildet.

In Fig. 2 sind zwei unterschiedliche Fälle des Bereitstellens des Schritts S104 der Fig. 1 dargestellt.

Zuerst werden die Schritte S100 - S103 durchgeführt und im Zuge dessen die jeweiligen identifizierten Kommunikationsbeziehungen KB1 - KB3 zwischen den zwei (ausgewählten) Anwendungen APP1, APP2 aus der Mehrzahl von Anwendungen APP1 - APP6 identifiziert und klassifiziert. Dies ist in Fig. 2 anhand des Pfeiles, welcher mit den Schritten S100 - S103 beschriftet ist, dargestellt.

In dem ersten Fall werden in dem Schritt S104 die zwei Anwendungen APP1, APP2 auf einer selben Kommunikationseinrichtung 10 bereitgestellt, wenn der ermittelte Stärkewert einen vorgegebenen Schwellwert überschreitet. Dies ist anhand der beiden gestrichelten Pfeile, welche mit dem Schritt S104 beschriftet sind, zu erkennen. Die beiden gestrichelten Pfeile sollen indizieren, dass die zwei Anwendungen APP1 und APP2 auf derselben Kommunikationseinrichtung 10 bereitgestellt werden.

In einem zweiten Fall werden in dem Schritt S104 die zwei Anwendungen APP1, APP2 jeweils auf unterschiedlichen Kommunikationseinrichtungen 10, 20 in dem Kommunikationssystem 200 bereitgestellt, wenn der ermittelte Stärkewert den vorgegebenen Schwellwert unterschreitet oder gleich dem vorgegebenen Schwellwert ist. Hierbei wird die Anwendung APP1 in der Kommunikationseinrichtung 10 bereitgestellt, während die Anwendung APP2 auf der weiteren Kommunikationseinrichtung 20 bereitgestellt wird (siehe den durchgezogenen Pfeil der Anwendung APP2 zu der weiteren Kommunikationseinrichtung 20).

Fig. 3 zeigt ein schematisches Blockdiagramm eines Ausführungsbeispiels eines Kommunikationssystems 200. In dem Kommunikationssystem der Fig. 3, welches als Automatisierungssystem ausgebildet ist, ist das Deployment der Anwendungen APP1 - APP6 gemäß Schritt S104 der Fig. 1 bereits zumindest einmal erfolgt. Mit anderen Worten wurde das Verfahren gemäß der Schritte S100 - S104 zumindest einmal ausgeführt. Das Kommunikationssystem 200 der Fig. 3 umfasst hierbei eine Mehrzahl von Anwendungen APP1 - APP6, eine Steuerungsvorrichtung 210 und eine Mehrzahl von zumindest als Hostrechner oder Feldgerät ausgebildeter Kommunikationseinrichtungen 10 - 40. In Fig. 3 sind die Kommunikationseinrichtungen 10 und 40 jeweils als ein Hostrechner und die Kommunikationseinrichtungen 20 und 30 jeweils als ein Feldgerät, wie ein Roboter oder ein Sensor, ausgebildet.

Das Kommunikationssystem 200 der Fig. 3 weist ferner eine Anzahl N2 von Netzwerken NW1 - NW3 auf. Die Netzwerke NW1 und NW2 umfassen die Kommunikationseinrichtungen 10 - 40, mit N2 ≥ 1. Die Netzwerke NW1 - NW3 sind jeweils mit der Steuerungsvorrichtung 210 zum Übertragen von Daten verbunden. Auch ist das Netzwerk NW1 mit dem Netzwerk NW2 als auch dem Netzwerk NW3 zum Übertragen von Daten verbunden.

Eine Anwendung APP1 - APP6 kann als eine Applikation, als ein Dienst, als ein Microservice, als eine Gruppe von Microservices oder als eine in einem Container eingebettete Anwendung ausgebildet sein. In der Fig. 3 sind die Anwendungen APP1 - APP3 jeweils als eine Anwendung ohne Container, also beispielsweise als eine Software-Applikation, welche auf der jeweiligen Kommunikationseinrichtung 10, 40 ausgeführt wird, ausgebildet. Die Anwendungen APP4 - APP6 hingegen sind in der Fig. 3 beispielsweise jeweils als eine in einem Container CON eingebettete Anwendung ausgebildet. Zur Ausführung des Containers CON sind die Anwendungen APP4 - APP6 insbesondere in einer Ausführungsumgebung AU, insbesondere einer Containervirtualisierungsumgebung, ausgebildet. Zwischen den Anwendungen APP1 und APP2 wurde ein Kommunikationsbeziehung KB1, zwischen den Anwendungen APP2 und APP3 wurde eine Kommunikationsbeziehung KB2 und zwischen den Anwendungen APP4 und APP5 wurde in der Fig. 3 eine Kommunikationsbeziehung KB3 identifiziert. Insbesondere umfasst die Steuerungsvorrichtung 210 der Fig. 3 eine Containerorchestrierungseinheit. Sofern zumindest zwei der Anwendungen APP1 - APP6 jeweils als in einem Container eingebettete Anwendung ausgebildet sind, beispielsweise die Anwendungen APP4 und APP5, ist die Containerorchestrierungseinheit dazu eingerichtet, das Verfahren gemäß Fig. 1 durchzuführen. Insbesondere verwaltet und steuert die Containerorchestrierungseinheit als Container ausgebildete Anwendungen.

In einer weiteren Ausführungsform (nicht dargestellt) sind die Anwendungen APP1 - APP6 jeweils als eine in einem Container eingebettete Anwendung ausgebildet, in welchem die eingebetteten Anwendungen vorzugsweise als Microservices ausgeführt werden und durch die Containerorchestrierungseinheit verwaltet und insbesondere gemäß der Schritte S100 - S105 bereitgestellt werden.

Obwohl die vorliegende Erfindung anhand von Ausführungsbeispielen beschrieben wurde, ist sie vielfältig modifizierbar.

### Bezugszeichenliste

- 10: Kommunikationseinrichtung
- 20: Kommunikationseinrichtung
- 30: Kommunikationseinrichtung
- 40: Kommunikationseinrichtung
- 200: Kommunikationssystem
- 210: Steuerungsvorrichtung

- APP1: Anwendung
- APP2: Anwendung
- APP3: Anwendung
- APP4: Anwendung
- APP5: Anwendung
- APP6: Anwendung
- AU: Ausführungsumgebung
- CON: Container
- KB1: Kommunikationsbeziehung
- KB2: Kommunikationsbeziehung
- KB3: Kommunikationsbeziehung
- NW1: Netzwerk
- NW2: Netzwerk
- NW3: Netzwerk
- S100: Verfahrensschritt
- S101: Verfahrensschritt
- S102: Verfahrensschritt
- S103: Verfahrensschritt
- S104: Verfahrensschritt
- S105: Verfahrensschritt

## Patentansprüche

1. Verfahren zum Bereitstellen einer Mehrzahl von Anwendungen (APP1 - APP6) in einem Kommunikationssystem (200), insbesondere innerhalb eines Automatisierungssystems, mit einer Mehrzahl von Kommunikationseinrichtungen (10 - 40), mit den Schritten:
a) Identifizieren (S100) einer Anzahl N1 von potenziellen Kommunikationsbeziehungen (KB1 - KB3) zwischen zumindest zwei der Anwendungen (APP1, APP2) aus der Mehrzahl von Anwendungen (APP1 - APP6), wobei eine jeweilige potenzielle Kommunikationsbeziehung (KB1 - KB3) ein Übertragen von Daten zwischen den zwei Anwendungen (APP1, APP2) während eines Betriebs der zwei Anwendungen (APP1, APP2) ermöglicht, mit N1 ≥ 1,
b) Klassifizieren (S101) der jeweiligen identifizierten Kommunikationsbeziehung (KB1 - KB3) hinsichtlich ihrer Kommunikationshäufigkeit zum Erhalten eines jeweiligen ersten Klassifikationsergebnisses,
c) Klassifizieren (S102) der jeweiligen identifizierten Kommunikationsbeziehung (KB1 - KB3) hinsichtlich zumindest eines bestimmten Sicherheitsparameters zum Erhalten eines jeweiligen zweiten Klassifikationsergebnisses,
d) Ermitteln (S103) eines Stärkewertes einer der jeweiligen identifizierten Kommunikationsbeziehung (KB1 - KB3) zugeordneten Sicherheit in Abhängigkeit des jeweiligen erhaltenen ersten und zweiten Klassifikationsergebnisses, und
e) Bereitstellen (S104) der zwei Anwendungen (APP1, APP2) auf einer selben Kommunikationseinrichtung (10) der Mehrzahl, wenn der ermittelte Stärkewert zumindest einen vorgegebenen Schwellwert überschreitet.

2. Verfahren nach Anspruch 1,
**dadurch gekennzeichnet,**
**dass** Schritt d) (S103) umfasst:
Ermitteln des Stärkewertes anhand einer bestimmten Kostenfunktion, welche das jeweilige erhaltene erste und zweite Klassifikationsergebnis als Eingaben aufweist.

3. Verfahren nach Anspruch 1 oder 2,
**dadurch gekennzeichnet,**
**dass** die Schritte a) bis d) (S100 - S103) zeitlich vor dem Schritt e) (S104) durchgeführt werden, wobei das Bereitstellen im Schritt e) (S104) ein Ausrollen der zwei Anwendungen (APP1, APP2) auf derselben Kommunikationseinrichtung (10) umfasst.

4. Verfahren nach einem der Ansprüche 1 - 3,
**gekennzeichnet durch**:
f) Wiederholen (S105) der Schritte a) bis e) (S100 - S104), wenn während des Betriebs der zwei Anwendungen (APP1, APP2) eine vorbestimmte Änderung betreffend zumindest eine der jeweiligen Kommunikationsbeziehungen (KB1 - KB3) zwischen den zwei Anwendungen (APP1, APP2) und/oder eine vorbestimmte Änderung betreffend eine der zwei Anwendungen (APP1, APP2) erkannt wird.

5. Verfahren nach Anspruch 4,
**dadurch gekennzeichnet,**
**dass** die vorbestimmte Änderung eine Änderung des bestimmten Sicherheitsparameters zumindest einer der jeweiligen Kommunikationsbeziehungen (KB1 - KB3) zwischen den zwei Anwendungen (APP1, APP2) und/oder eine Änderung einer Ressourcenkapazität einer weiteren in dem Kommunikationssystem (200) vorhandenen Kommunikationseinrichtung (20 - 40) umfasst, wobei die Änderung der Ressourcenkapazität ein Vorhandensein von Ressourcenkapazitäten für zumindest eine der jeweiligen Kommunikationsbeziehungen (KB1 - KB3) auf der weiteren Kommunikationseinrichtung (20 - 40) umfasst.

6. Verfahren nach einem der Ansprüche 1 - 5,
**dadurch gekennzeichnet,**
**dass** der Schritt e) (S104) ferner umfasst:
Bereitstellen der zwei Anwendungen (APP1, APP2) auf derselben Kommunikationseinrichtung (10), wenn der ermittelte Stärkewert den vorgegebenen Schwellwert überschreitet und wenn auf derselben Kommunikationseinrichtung (10) bestimmte Ressourcen verfügbar sind.

7. Verfahren nach einem der Ansprüche 1 - 6,
**dadurch gekennzeichnet,**
**dass** der Schritt c) (S102) ferner umfasst:
Klassifizieren der jeweiligen identifizierten Kommunikationsbeziehung (KB1 - KB3) hinsichtlich zumindest eines bestimmten Sicherheitsparameters und eines bestimmten Schutzziels zum Erhalten des jeweiligen zweiten Klassifikationsergebnisses.

8. Verfahren nach einem der Ansprüche 1 - 7,
**dadurch gekennzeichnet,**
**dass** die Kommunikationshäufigkeit quantitative Parameter oder qualitative Parameter umfasst.

9. Verfahren nach einem der Ansprüche 1 - 8,
**dadurch gekennzeichnet,**
**dass** der Schritt e) (S104) umfasst:
Bereitstellen der zwei Anwendungen (APP1, APP2) jeweils auf unterschiedlichen Kommunikationseinrichtungen (10, 20) in dem Kommunikationssystem (200), wenn der ermittelte Stärkewert den vorgegebenen Schwellwert unterschreitet oder gleich dem vorgegebenen Schwellwert ist.

10. Verfahren nach einem der Ansprüche 1 - 9,
**dadurch gekennzeichnet,**
**dass** eine Kommunikationseinrichtung (10 - 40) des Kommunikationssystems (200) zumindest als ein Hostrechner oder als ein Feldgerät ausgebildet ist, wobei das Kommunikationssystem (200) ferner eine Anzahl N2 von Netzwerken (NW1 - NW3) umfasst, wobei ein jeweiliges Netzwerk (NW1 - NW3) jeweils zumindest eine Kommunikationseinrichtung (10 - 40) umfasst, mit N2 ≥ 1.

11. Verfahren nach einem der Ansprüche 1 - 10,
**dadurch gekennzeichnet,**
**dass** eine Anwendung (APP1 - APP6) zumindest als eine Applikation, als ein Dienst, als ein Microservice, als eine Gruppe von Microservices oder als eine in einem Container (CON) eingebettete Anwendung ausgebildet ist.

12. Computerprogrammprodukt, umfassend Befehle, die bei der Ausführung des Programms durch einen Computer diesen veranlassen, das Verfahren nach einem der Ansprüche 1 - 11 auszuführen.

13. Kommunikationssystem (200), insbesondere Automatisierungssystem, umfassend eine Mehrzahl von Anwendungen (APP1 - APP6), eine Steuerungsvorrichtung (210) und eine Mehrzahl von zumindest als Hostrechner oder Feldgerät ausgebildeter Kommunikationseinrichtungen (10 - 40), wobei zumindest eine Teilmenge der Mehrzahl von Anwendungen (APP1 - APP6) in einem Speicher der Steuerungsvorrichtung (210) gespeichert ist, wobei die Steuerungsvorrichtung (210) dazu eingerichtet ist, das Verfahren gemäß einem der Ansprüche 1 - 11 durchzuführen.

14. Kommunikationssystem nach Anspruch 13,
**dadurch gekennzeichnet,**
**dass** die Steuerungsvorrichtung (210) eine Containerorchestrierungseinheit umfasst, welche dazu eingerichtet ist, sofern zumindest zwei der Anwendungen (APP1, APP2) der Mehrzahl von Anwendungen (APP1 - APP6) jeweils als in einem Container (CON) eingebettete Anwendungen (APP1, APP2) ausgebildet sind, das Verfahren gemäß einem der Ansprüche 1 - 11 durchzuführen.
